# EUROPEAN PATENT SPECIFICATION

(11) **EP 1 374 115 B1**
(45) Date of publication and mention of the grant of the patent: **20.07.2011**
(21) Application number: 02703226.7
(22) Date of filing: 23.01.2002
(51) Int. Cl.: G06Q 30/00, H04L 29/06, H04L 29/08

(54) **SYSTEM FOR DYNAMIC GENERATION OF ONLINE STREAMING MEDIA ADVERTISEMENTS**
SYSTEM ZUR DYNAMISCHEN ERZEUGUNG VON ONLINE-STREAMING-MEDIA-WERBUNG
SYSTEME DE GENERATION DYNAMIQUE DE PUBLICITES EN-LIGNE DANS UN CONTENU MULTIMEDIA EN CONTINU

(30) Priority: 31.01.2001 US 773943
(43) Date of publication of application: 02.01.2004
(73) Proprietor: Yahoo, Inc., Sunnyvale, CA 94089 (US)
(72) Inventor: JACOBY, Ronald, Cupertino, CA 95104 (US); DUKES, Derek, B., San Jose, CA 95112 (US)
(74) Representative: Cross, Rupert Edward Blount
(86) International application number: PCT/US2002/002104
(87) International publication number: WO 2002/061530

(56) References cited:
- WO-A-00/54201
- WO-A-01/35290
- US-A- 6 029 200
- US-A1- 2002 059 099
- US-A1- 2002 073 220
- US-A1- 2002 082 913
- US-A1- 2002 091 764
- US-B1- 6 415 327
- USING HTML TEMPLATES IN MICROSOFT WINDOWS MEDIA ON-DEMAND PRODUCER, [Online] October 2000 (2000-10), pages 1-7, XP002294273 Retrieved from the Internet: URL:http://msdn.microsoft.com/archive> [retrieved on 2004-08-20]
- 'IMedia advertising services information page' IMEDIA NETWORKS, [Online] page 1, XP002960844 Retrieved from the Internet: <URL:http://www.imedia.net/service/advertis ing.php> [retrieved on 2002-08-22]

## Description

This invention relates generally to providing advertisements. Embodiments provide online streaming media advertisements based on collected and stored user attributes.

Advertising is and will remain a very important aspect of the ever broadening reaches of the Internet. Every day, millions of people surf the endless number of websites. In this regard, the Internet has proven to be an invaluable source for targeting products to consumers. A well placed advertisement on a high traffic website may produce as many views as conventional print or television advertising. Even more important than just placing an Internet advertisement is the ability to target consumers who will actually observe and appreciate the content. Advertisers get far more "bang for their buck" by targeting advertisements, and are therefore willing to pay more money for this type of ad placement.

Numerous types of streaming multimedia are available on the Internet. Because of its abundance, streaming media runs a spectrum of interests regarding content. For example, one can watch a variety of web broadcasts such as financial reports, music videos, news reports and sporting events to name a few. To this end, streaming multimedia lends itself nicely to the provision of targeted advertisements inserted into the media stream.

Clearly, it is advantageous to provide a playlist of targeted advertisements, particularly for use in a streaming multimedia environment. Further, it is desirable if playlists of advertisements could by dynamically created based on user attributes such as behaviour, interests and demographics to name a few.

WO 00/54201 discloses an Internet advertisement system in which an advertisement server performs a match between advertisement materials and users, and sends advertisement material for display in a service provider client application. Clicking an advertisement displayed may cause the separate browser utility to seek related hypertext material over the Internet.

### SUMMARY OF THE INVENTION

The invention relates to providing online streaming media advertisements.

According to an aspect of the invention, there is provided a method for providing streaming multimedia advertisements as set out in claim 1.

According to another aspect of the invention, there is provided a method executed by at least one server to provide streaming content as set out in claim 8.

In one embodiment, a process for dynamically providing streaming multimedia advertisements is disclosed. In the process, a browser window is opened and a frame set having a media player and a data frame is built in said browser window. The media player requests and receives a playlist having advertisements and/or media content. The media player connects to at least one media server to play the advertisement and/or said media content from the playlist.

Reference to the remaining portions of the specification, including the drawings and claims, will realize other features and advantages of the present invention. Further features and advantages of the present invention, as well as the structure and operation of various embodiments of the present invention, are described in detail below with respect to the accompanying drawings. In the drawings, like reference numbers indicate identical or functionally similar elements.

### BRIEF DESCRIPTION OF THE DRAWINGS

Figure 1 is a block diagram of one embodiment of the streaming media advertisement system;
Figure 2 is a media presentation window in accordance with the present invention; and
Figures 3, 3A and 3B are a flow chart of the processing performed for providing streaming media.

### DESCRIPTION OF THE SPECIFIC EMBODIMENTS

A Streaming Advertisement method according to the present invention may be provided by several interrelated components that alone or in various combinations provide streaming media advertisements. The components are probably best described by tracing a streaming media request.

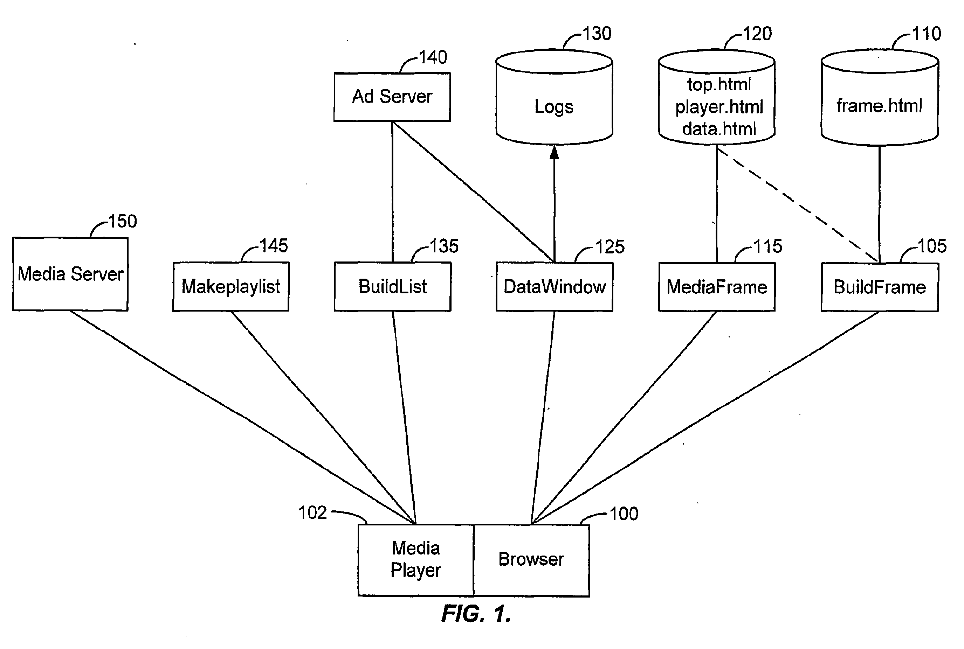

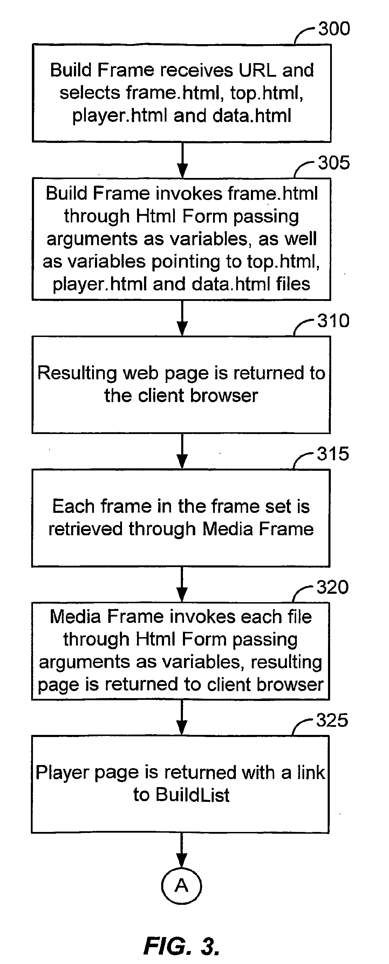

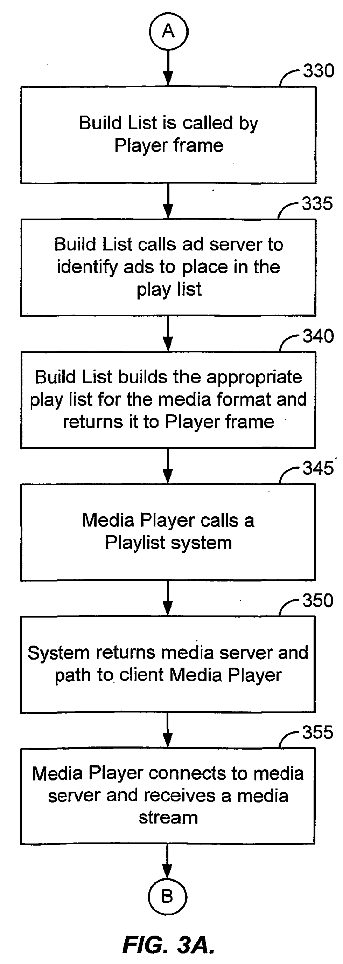

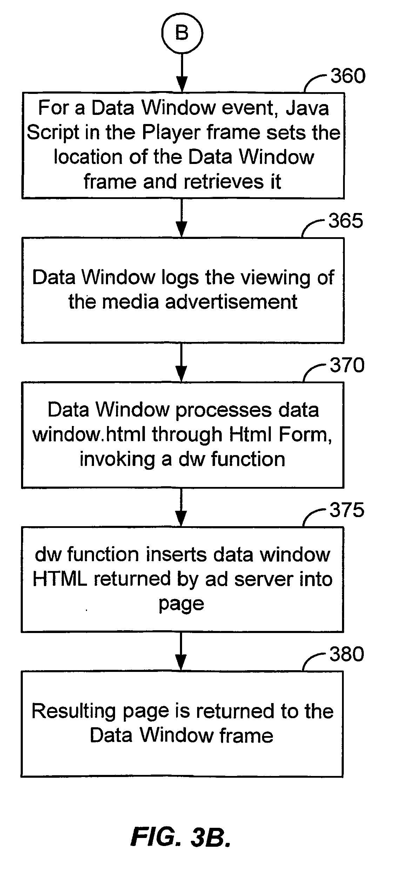

A typical scenario, which is discussed below and with reference to Figures 3 and 3A, begins with a user observing a page with a link to audio or video content. The link may have, for example, JavaScript that opens a new client browser window when clicked. As shown in Figure 1, the URL that is the target of the link shown in browser 100 points to a BuildFrame Module 105 of a Media Frame Module 115 and passes, as URL arguments, a number of parameters that will be used to invoke the requested media presentation. The arguments may include, but are in no way limited to, the Broadcast Stream ID that identifies the media, the media format, the media data rate, the property, the space ID, and a series of arguments to indicate where advertisements can be played in the invoked media content. One example of a URL with associated URL arguments in accordance with the present invention is:
http://broadcast.yahoo.com/buildframe?id=123456&p= broadcast&f=654321&m=wmv&r=56&a=0,30

BuildFrame module 105 is invoked, receives (at step 300 of Figure 3) a URL such as the URL in the above illustrated example, and builds a frame set for the created client browser window 100. Continuing with the illustrated embodiment, this frame set has three parts: the top frame that is used for property identification, the player frame that is used for an embedded media player, and the data frame that is used for data presentation that is synchronized with the streaming media shown by the media player. BuildFrame module 105 parses the URL and pulls out the property, space ID, and stream ID fields. The three enumerated fields construct a directory path name.

The directory is then searched for the files frame.html, top.html, player.html, and data.html 110, 120. The listed files define the parameters of the individual frames and the frame set. For example, frame.html file is used for the overall frame set definition. Further, any one of top.html, player.html, data.html may be used for the definition of one of the frames. For each file, the directory *ROOT*/*property*/*spaceID*/*streamID* is examined to determine if the file is present. If the file is found, then it is used to set the parameters for the frame or frame set. If the file does not exist in the searched directory, then the next higher level directory is examined (*ROOT*/*property*/*spaceID*). This procedure continues up to the top level directory (ROOT/) where a default set of files resides. In this way, HTML for an individual frame, frame set, or both can be customized on a per stream basis, while requiring only minimal changes as individual events change.

BuildFrame module 105 (at step 305 of Figure 3) uses an HtmlForm mechanism to invoke the frame set file when the appropriate files are found. The HtmlForm mechanism enables variable substitution with HTML files. The HtmlForm mechanism acts as a server side page evaluator. It can be used to do variable substitution as well as simple logic constructs based on the values of the variables. The HtmlForm engine is passed either as a filename or an open file pointer, a hash of variables, an output buffer, a list of handler functions and a data structure to be passed into the handler functions. In this way, the frame set can use the appropriate variables to point to the top, the player, and the data frame definitions that were identified by the BuildFrame module. The resulting webpage is returned to the client browser (at step 310 of Figure 3). These individual frames may then be invoked via a MediaFrame module (at steps 315 and 320 of Figure 3) described hereinafter, and the webpage is returned to the client with a link to BuildList (at step 325 of Figure 3).

MediaFrame module 115 also uses the HtmlForm mechanism to process the HTML files. URLs that are constructed to point to the files identified by BuildFrame module 105 utilize MediaFrame module 115. A number of variables that are set by MediaFrame module 115 may be used in the individual frames. The most common use of these variables is in the player frame. The player frame embeds a media player 102. In one embodiment, a Microsoft Windows Media Player is used, but as one skilled in the art can appreciate, any suitable media player may be used. The player frame then directs media player 102 to a BuildList module 135. BuildList module 135 returns a play list to media player 102 that has a set of advertisements and media content to play by the media player 102. Variables pass the URL arguments to the URL invoked by media player 102 so that advertisements can be correctly selected for the media stream to be played.

As stated above, and with reference to steps 330, 335 and 340 of Figure 3A, BuildList module 135 is called upon by media player 102 (at step 330), calls an advertising server 140 (at step 335) and thereafter returns a play list of clips to play (at step 340). The returned clips may include, for example, advertisements and the selected media content. In the illustrated embodiment, Windows Media Player ASX files are returned. However, as one skilled in the art will appreciate, any suitable media player file for the corresponding embedded media player may be returned, such as JavaScript that controls a Real Player. BuildList module 135 parses arguments contained in the calling URL and submits requests to an advertising server 140. In response, ad server 140 returns a reference to a targeted streaming media advertisements. For example, the reference may be a unique ID or URL. The advertisements returned are built into the ASX play list. The play list comprises references to individual clips consisting of the advertisements and the media content. In the illustrated embodiment, the references will be to clips stored in, for example, a make play list system 145 at Yahoo! Broadcast. Media player 102 receives the play list, and for each clip in the list, connects to a media server 150 to play the clip. As shown in Figure 3A, media player 102 calls a play list system 145 (at step 345). The system returns a media server 150 path to the media player 102 (at step 350). Media player 102 connects to the media server 150 and receives a media stream (at step 355).

A script command that references a URL for the HTML part of the advertisement is embedded within the encoded media stream of each advertisement. This URL refers to a DataWindow module 125 and passes information back through the URL. This information, inter alia, allows module 125 to match the streaming media content with the HTML content of the advertisement through ad server 140, log the viewing of the streaming advertisement, and rewrite the links of the HTML data window content so they run through a redirect server for click-through tracking.

### Media Presentation

In an exemplary embodiment, media presentation is provided comprising a player window and a data window. The windows are configured such a that a media stream may be played in the player window while, simultaneously, accompanying data may be shown in the data window. The data and the media stream share a common underlying connection, such as an audio stream of a book on tape in a streaming media window and corresponding information about the author in the data window.

Created links that point to underlying media content should specify an "onClick" action to open a new browser window when the link is selected. In one embodiment, the opened browser window is set to a width of 640 pixels and a height of 440 pixels. For a reasonable appearance on a 640x480 display, the window should be positioned with "left" set to 0 and "top" set to 20. In addition, the toolbar, status, scrollbars, and resize properties should all be set to "no." An example of such a link is:
<a href="http://broadcast.yahoo.com/buildframe?id=161525&p=broadcast& f=27062079&1=SAM&m=wmv&r=56&a=0,30" onClick="window.open ('http://bcst.yahoo.com/buildframe?id=161525&p=broadcast&f=27062079 &1=SAM&m=wmv&r56&a=0,30','Media','width=640,height=440,left=0, top=30,toolbar=no,status=no,scrollbars=no,resize=no');return false">

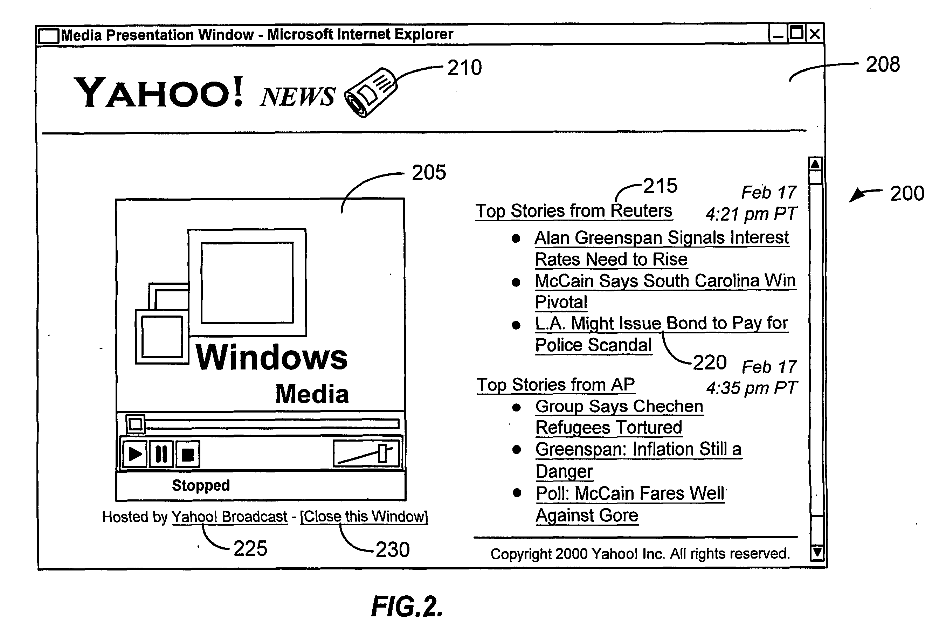

As shown in Figure 2, a Media Presentation window 200 is illustrated in a frame set. The frame set may divide the window into three frames. In one embodiment, at the top of the window, a single frame called TopWindow 208 extends the entire width. TopWindow frame 208 presents and identifies the launching property of the media presentation. In the illustrated embodiment, a property banner 210 is used on the left side of Top Window 208. On the right side of the TopWindow 208, space is available for a 230x33 banner advertisement or for one or two 88x31 sponsor buttons to name a few. Links that launch from advertisements or buttons should preferably target either a blank frame or the top frame so as to avoid displaying within Media Presentation Window 200.

Below TopWindow 208, the frame set divides Media Presentation Window 200 in half horizontally. On the left side is PlayerWindow 205. PlayerWindow 205 is used to embed the media player corresponding to the presented media. In the illustrated embodiment of Figure 2, Player Window 205 has been sized such that a presentation resolution of up to and including 320x240 pixels will be displayed. The player may be set for automatic resizing, so it changes to the size of the underlying media that is being played. Beneath the embedded player, two links are displayed. In the illustrated embodiment, one link is to Yahoo! Broadcast 225 and the other link is to close the Media Presentation Window 230.

Continuing with the embodiment shown in Figure 2, a Data Window 215 is located to the right of PlayerWindow 205. DataWindow 215 displays HTML that is either conceptually or physically connected with the media presentation. For example, when viewing a live sporting event in Player Window 205, DataWindow 215 may cycle through a list of sports scores. There is no actual physical link in the sporting event that drives DataWindow 215, however, there is a conceptual link between the sporting event and the cycling scores. In another embodiment, a finance media clip shown in Player Window 205 may include events that drive DataWindow 215 to different stock quotes corresponding to the respective subject companies. In this case, there is more than just a conceptual link between Player Window 205 and Data Window 215. The physical links may be created by encoding media content with events that contain URLs that target the DataWindow frame. It is therefore desirable that DataWindow 215 remain dynamic. By way of either refreshes or in-stream URL changes, DataWindow 215 is a dynamic and changing part of the media content shown in Player Window 205.

As one skilled in the art can appreciate, the content in DataWindow 215 may be any HTML or other media presentation, but care should be taken to limit the number of high bandwidth elements such as images that might disrupt the media presentation. In one embodiment, DataWindow 215 may be reduced to a size of 280x290 pixels. In addition, DataWindow 215 may be scrollable.

### Media Frame Module

In one embodiment of the invention, the Media Frame module has two parts. First, the module comprises a BuildFrame module that processes URL arguments and searches a directory structure for matching files to build a frame set. Second, the module comprises a MediaFrame module that is used to process the matching-files. Together, the two modules instantiate and invoke streaming media content in a browser window, for example, providing transmissions to a streaming ad module to provision advertisements. In addition, both modules are built on the HtmlForm mechanism, meaning that both may process HTML template files and perform variable substitution and simple control logic. The Media Frame modules parse the same URL arguments as the BuildList module.

### BuildFrame Module

The BuildFrame module may be initially invoked to build a frameset for the media presentation window. In one embodiment, MediaFrame module is invoked for each frame within a frameset. The following is one example of a URL invoking the BuildFrame module:
http://broadcast.yahoo.com/buildframe?id=123456&p=broadcast&f=654321& 1=SAM&m=wmv&m56&a=0,30

The above illustrated URL calls the BuildFrame module. The BuildFrame module parses the URL arguments to extract the property, spaceid, and streamid. Continuing with the above example, the extracted arguments form the following path or directory name:
/home/apache/htdocs/mediaframe/*property*/*spaceid*/*streamid*

The BuildFrame module searches for the files frame.html, top.html, player.html and data.html in the above directory. Table 1 below explains the contents of the four files.

**Table 1 - Files searched for in the created directory**

| **File Name** | **Contents** |
|---|---|
| frame.html Window. | This file contains the frameset definitions used to build the Media Presentation Within the frameset, each of the other files is used as source for a frame. |
| top.html to | This file defines the TopWindow frame of the Media Presentation Window used identify the property under which the stream is being invoked. |
| player.html | This file defines the PlayerWindow frame of the Media Presentation Window. The file contains HTML and JavaScript to embed the Windows Media Player and handle advertisements and stream logging. |
| data.html | This file defines the DataWindow frame of the Media Presentation Window. This file contains the initial data window content. In some cases, it may simply contain a table or iframe definition that invokes another URL. |

If the BuildFrame module does not find one of these files in the initial search directory, it proceeds to "walk back up" the directory tree looking for the file at each level. When a matching file name is found, that file is used. In this way, it is possible to create HTML that is unique to a streamid, a spaceid, or a property. In the example, the top level directory of /home/apache/htdocs/mediaframe/ contains a default set of files, so a match will always occur at the top level if no other customization is performed. Property owners creating a customized look for their property or for more targeted segments may modify the existing files to obtain the look they desire. These files should then be pushed to the appropriate place in the directory structure.

After the BuildFrame module determines the matching file, it uses the HtmlForm module to display the "frame.html" file. Table 2 illustrates the variables that may be set and can be used in the frame.html file:

**Table 2 - Variables used in the "frame.html" file**

| **BuildFrame Variable** | **Value** |
|---|---|
| host | The host name as pulled from the requested URI. |
| uri | The full requested URI. |
| args | The full argument string passed in the URL. These can then be passed as part of the source URL to the media player through the streaming ad module. For instance, src="http:/ /broadcast.yahoo.com/buildlist.asp?${args}". |
| prop | The property encoded with the p argument. |
| cat | The category modifier of the property encoded with the c argument. The category modifier, if present, will be used instead of the property as the first element in the directory. |
| space | The spaceID encoded with the f argument. |
| id | The streamID encoded with the id argument. |
| media | The media format encoded with the m argument. |
| rate | The rate encoded with the r argument. |
| datamod | The data module encoded with the d argument. If no argument is passed, the default is 0. |
| frame | The full path name to the frame file invoked. |
| top | A URL to invoke the matching "top.html" file. |
| player | A URL to invoke the matching "player.html" file. |
| data | A URL to invoke the matching "data.html" file. |
| args | The full argument string passed in the URL. These may then be passed as part of the URLs to invoke each frame. For example, a player frame may have a source of src="$ {player}?${args}". |

### MediaFrame Module

The URLs set as BuildFrame variables invoke the MediaFrame module. The MediaFrame module parses the same URL arguments as the streaming ads module and the BuildFrame module. The parsed arguments define several variables that are available to the HTML through the HtmlForm module. These variables are:

**Table 3 - HTML Variables**

| **MediaFrame Variable** | **Value** |
|---|---|
| host | The host name as pulled from the requested URI. |
| uri | The full requested URI. |
| args | The full argument string passed in the URL. These arguments may be passed as part of the source URL to the media player through the streaming ad module. For instance, src="http://broadcast.yahoo.com/buildlist.asp?${args}". |
| prop | The property encoded with the "p" argument. |
| cat | The category modifier of the property encoded with the c argument. The category modifier, if present, will be used instead of the property as the first element in the directory. |
| space | The spaceID encoded with the "f" argument. |
| id | The streamID encoded with the "id" argument. |
| media | The media format encoded with the "m" argument. |
| rate | The rate encoded with the "r" argument. |
| datamod | The data module encoded with the "d" argument. If no argument is passed, the default is 0. |

### BuildList Module

The BuildList module returns a play list to a calling player. The returned play list contains - both the desired media content and the streaming media advertisements. Parameters are passed to the BuildList Module through the URL invoked by the player. In one embodiment, BuildList module may build play lists for the Microsoft Windows Media Player using the ASX file format. Based on the arguments passed in the URL, the BuildList module builds an ASX play list that comprises both entries for advertisements and entries for the media content. However, as one skilled in the art can appreciate, any media player and corresponding file format may be used without departing from the intended scope of the invention. For example, in another embodiment, BuildList module may construct JavaScript that will build a playlist for a Real Player.

The BuildList module is capable of provisioning advertisements before, during, or after the media content. One example is an advertisement that runs before the media content. The "a" argument controls the placement and duration of advertisements. An advertisement is provisioned for each occurrence of the "a" argument in the invoking URL. The syntax of the "a" argument is a=*position*,*duration* where *position* represents where in the stream the advertisement should be placed. *Position* is an integer value, optionally followed by an "e" to denote an event-based advertisement. For non event-based advertisements, *position* indicates the location for placing the advertisement, particularly following which clip within the generated playlist. Two special positions are 0 and $. A *position* of 0 denotes the advertisement should run before the media content, while a *position* of $ denotes the advertisement should run at the end of the media content. Placing advertisements at these positions does not require any script command event encoded in the media content to be triggered, so they can be used with all existing media content. In an embodiment in accordance with the invention as claimed, using a *position* other than 0 or $ indicates an advertisement that runs somewhere in the middle of the media content. Advertisements provisioned for play someplace in the middle of media content are carried out via script command events. In one embodiment, the BuildList module creates an event called Y!AD *position* in the play list where *position* corresponds to the *position* of the "a" argument. When triggered, the Y!AD event plays the advertisements. When the advertisement is complete, the media content resumes. The media content contains the corresponding event with a parameter of Y!AD *position* encoded in the stream at the location where the advertising break is to occur to trigger the event.

Event-based positions may be accomplished via script command events. In one embodiment, a BuildList module creates an event called *Y!AD position* in the play list where *position* corresponds to the position of the a argument (without the trailing e parameter). When triggered, the event plays the advertisements, and when complete, resumes the media content. To trigger the event, the media content contains the corresponding event with a parameter of *Y!AD position* encoded in the stream at the location where the advertising break is to occur. Event-based advertisements allow the placing of advertisements within a single clip of media, but require adding a script command to the media in the advertising locations.

The *duration* passed in the "a" argument represents the length in seconds of the advertising break that is to be filled. In one embodiment, only single advertisements are used to fill the available space. Therefore, if a single 60 second advertisement is available, a single a=0,60 argument should be used. However, if two 30 second advertisements are desired, two arguments of a=0,30 may be used, which appears for example as a=0,30&a=0,30. It is important that *duration* values used correspond to available advertisements. See the table below for typical values that should be used.

Table 4 illustrates and describes a few of the possible arguments contained in the URL. Arguments may be separated from the path by a question mark (?). An ampersand (&) separates each individual argument. The id argument, and any other arguments which are not recognized, are passed through as part of the invocation of the media content.

**Table 4 - Description and Examples of Arguments**

| **Key** | **Description** | **Example** |
|---|---|---|
| id | stream ID of the requested media content | id=123456 |
| f | full (or leaf) spaceid of the page | f=0:2718085:152200001:1522 00017 or f=152200017 |
| p | short property name | p=finance or p=yahoo or p=mail_kr |
| | | |
| c | property category or product | c=cd_jukebox |
| t | title of play list to be build (special characters should be escaped using %xx) | t=album%20title |
| d | data module ID used in MediaFrame | d=1 |
| 1 | location for ad you want to look up (SAM is for streaming advertisement) | a 1=SAM |
| m | media format of stream, may be one of: | |
| | wmv Windows Media Video | |
| | wma Windows Media Audio | m=wmv |
| | rnv Real Networks Video | |
| | rna Real Networks Audio | |
| r | media rate of stream, may be one of: | |
| | 14 rate for 14.4 kb/s | |
| | 28 rate for 28.8 kb/s | r=100 |
| | 56 rate for 56.6 kb/s | |
| | 100 rate for 100 kb/s | |
| | 300 rate for 300 kb/s | |
| a | advertisements break locations and duration in stream. | For a 30 ad at the beginning of a clip: |
| | Format is: a=*position*,*duration* | |
| | | a=0,30 or a=30 |
| | where *position* is the break location of an event in the | |
| | media stream and *duration* is the length of the break in seconds. | For a 60 second ad at the end of a stream: |
| | If the value of *position* is not present, then a value of 0 is assumed. The values of *position* supported are: | a=$,60 |
| | 0 start of stream | For a 15 second ad after the first item in the playlist: |
| | n after item n in the playlist | |
| | ne break event n | a=1,15 |
| | $ end of stream | |
| | For an event-based advertisement (indicated with a | For a 30 second ad at break location 1: |
| | trailing e as part of the position), a corresponding | |
| | EVENT named Y!AD n must be placed in the stream to trigger the break. | a=1e,30 and an EVENT named Y!AD 1 must be placed in the stream trigger the break. |
| | The values of *duration* should be restricted to match values of advertisements. These generally are: | |
| | 15 15 seconds | |
| | 30 30 seconds | |
| | 45 45 seconds | |
| | 60 60 seconds | |
| | 90 90 seconds | |
| | 120 120 seconds | |
| | Multiple instances of the a key can be included, with each generating an advertisement. | |
| z | debugging flag (optionally compiled in module). Setting to 1 produces HTML debugging output rather than a play list. The playlets can be seen in the HTML source. | z=1 |

For example, assume a creation of a URL for a call to the BuildList Module for a Yahoo! Broadcast stream id of 123456 on a Windows Media Format video stream that has been encoded for a 56 kb/s connection. The stream is invoked from the property broadcast on a page with the spaceID of 654321, and there is no more than 60 seconds of advertisements inserted at the beginning of the stream. The URL to call would be:
http://broadcast.yahoo.com/buildlist.asp?id=123456&f=654321 &p=broadcast &1=SAM&m=wmv&r=56&a=60

### Logging for Streaming Advertisements

In one embodiment, the invention returns only a list of streaming advertisements that might be viewed, rather than HTML to be immediately placed on a page. This particular aspect of the invention requires a unique logging mechanism to track consumed advertisements. In addition, as part of this system, only generic events may be placed into the advertisements such that a single advertisement can occur in any number of properties or space IDs.

Continuing with another aspect of the invention, the logging mechanism for the Streaming Advertisement system only logs actual plays of the media content. This is quite different than simply building an advertisement into a play list, which may never actually be viewed. For example, as a streaming advertisement is played, an event encoded into the media stream may trigger JavaScript in the client to retrieve a URL that displays HTML that corresponds with the streaming media content. As part of retrieving the URL, the server side logs information that corresponds to the streaming media advertisement. In one embodiment, logging is accomplished by encoding special information in the play lists returned to the client media player, JavaScript in the client media player window, script commands encoded into media advertisements, and a DataWindow module on a web server. In one embodiment, the web server is a Yapache web server.

Each advertisement that is returned by the ad server contains unique data to log the play. In one embodiment, this unique information may consist of Match ID, Ad ID, Space ID, and Location. A mapping of an ID, generated from the Ad ID of the streaming media advertisement in an Ad System, to this unique information is created in each play list. Each advertisement may contain a script command that contains the ID as an argument. As this script command is played, JavaScript in the media player window receives this event, looks up the ID in a map contained in the play list, and sets the DataWindow URL to the entry contained in the list. As this URL is retrieved, a log entry is made.

In one embodiment of the invention, the Streaming Ads system supports Microsoft Windows Media. However, any similar media system may be used without departing from the intended scope of the invention. In a Microsoft Windows Media based system, ASX files build the playlists. The ID to URL map is encoded into the clip abstract of the ASX file. The map is contained between the characters "{" and "}". It comprises entries with several fields of the form key=value. Each entry is separated by a new line ("\n"). An example file is:
{ad=654321 dw=123456 dserv=http://broadcast.yahoo.com? M=STREAM.329202.49.1 P=abcdefghijklmn A=49 S=27062079:SAM L=SAM }

Each streaming media advertisement that is encoded contains a script command that identifies the advertisement. This script command preferably occurs at 1.0 seconds in the media stream, with a parameter of SETURL(ID), where ID is the Ad ID assigned to the streaming media advertisement.

In another aspect of the invention, the window or frame that embeds a Windows Media Player contains JavaScript to parse the ID to URL Map and process the script commands to perform the URL lookups. A default player frame that may be used by the Streaming Ads system contains the necessary JavaScript. Any modifications to this frame should start with the existing HTML and not modify any of the existing JavaScript routines.

Actual logging occurs as part of the URL lookup on the DataWindow module. The DataWindow module parses the URL arguments, thereby retrieving the Profile, match ID, and Ad ID of the streaming media advertisement, and thereafter logs this information. In one particular embodiment, this information is logged into a Yapache log on servers of an Internet website.

### Encoding Media

In most cases, Media is encoded before it is streamed over the Internet. In one embodiment, the Streaming Ads System of the present invention supports encoding media in Microsoft Window Media Format. As such, both the media content and the advertisement must be encoded in Window Media Format. In another embodiment, Real Player media is gathered via a URL identifying the stream. The presentation model comprises embedding script command into the media content and advertisements to create a multimedia experience. Advertisements may also include some additional script commands.

There are few requirements for the encoding of media content for use with the Streaming Ads System of the present invention. To this end, media content that contains embedded script commands that drive the DataWindow and possibly media content with interstitial advertising points, may be subject to requirements.

In one embodiment of the invention, Windows Media Technologies embeds data called script commands into a media stream. Script commands consist of two argument strings: a type and a parameter. Windows Media predefines a set of script commands. One such script command is a URL command. A URL command is used to drive a browser window to a new URL location. The format of the URL command is a type of URL and a parameter of the new URL for the window. One aspect of the present invention uses the URL command to drive the DataWindow in the media presentation. When it is desired to send the Data Window to a new URL, a URL command is embedded in the media stream with the parameter set to the target URL. The target URL should be a fully qualified, absolute URL, since the current state of the DataWindow is usually not known. By default, URL commands that occur in the media stream are targeted to the DataWindow. In one embodiment, script commands may be inserted into a stream directly from the Window Media Encoder as the stream is being encoded or added after encoding with an indexer, such as a Windows Media ASF Indexer.

Another type of predefined script command is an Event command. An Event command is used to invoke a new play list segment. In the context of the present invention, Event commands are used to trigger interstitial advertisements, which are advertisements that occur in the middle of media content. An Event command may have a type of EVENT and a parameter specifying the name of the Event to invoke. The BuildList module automatically builds play lists with Events defined for any interstitial breaks described to it. In one embodiment of the invention, the Events are named Y!AD *position* in the play list where *position* corresponds to arguments passed to the BuildList module. Positions would be 1, 2, 3, and so on, for each interstitial advertising break. Position 0 defines advertisements that occur before the media content and do not require an Event command in the stream. To define where the interstitial advertising break occurs in the media content, an Event command is inserted into the stream using, for example, a Windows Media Encoder or a Windows Media ASF Indexer. For example, the first interstitial advertising break, a script command with the type of EVENT and the parameter is Y!AD 1 is inserted.

The encoding of advertisements for use with the present invention may be subject to more requirements. Advertisements may make use of the same URL commands used in encoding media content to drive the DataWindow to HTML content that supports the advertisement. To this end, the same mechanisms and requirements on use of URL commands apply equally as well to media content and to advertisements.

Two additional defined script commands may be embedded into every advertisement. In one embodiment, each of these script commands has a type of YAHOO! and a parameter of the form *command*(*argument*). *Command* identifies the command action and argument represents additional data passed to the command action. Both script commands are of the SETURL command. The SETURL command takes, as an argument, a key that is used to index into a table to determine the URL for the DataWindow. By using this level of indirection, the actual URLs that are displayed can be changed dynamically by changing the table entries.

In one embodiment of the present invention, two SETURL commands are used. The first SETURL command is placed at 1.0 seconds into the media advertisement, and has an argument of the Ad ID of the corresponding DataWindow HTML for the advertisement. For example, if the DataWindow HTML had an Ad ID of 12345, then the script command that would be inserted would have a type of YAHOO! and a parameter of SETURL (12345). When this first script command is received by the Streaming Ads System PlayerWindow (at step 360 of Figure 3B), some JavaScript will run to call the DataWindow module 125 on the server to deliver the corresponding DataWindow HTML. The DataWindow module 125 logs the viewing of the media advertisement (at step 365 of Figure 3B). The DataWindow module processes the DataWindow HTML, through HTML Form, invoking a "dw" function (at step 370 of Figure 3B). The "dw" function inserts data window HTML returned by the ad server 140 into the page (at step 375 of Figure 3B). The resulting page is returned to the DataWindow frame 215 (at step 380 of Figure 3B).

In most cases, the last SETURL command for an advertisement is the command SETURL (default). This command is used to drive the DataWindow fame 215 back to its initial default location. Since all existing media content does not have any URL commands to drive the DataWindow frame 215, the DataWindow frame 215 for the advertisement would remain up for the entire duration of the media content, or at least until the next advertisement unless the SETURL (default) command is sent. By inserting the SETURL (default) command at 1.0 seconds before the end of the advertisement, the DataWindow frame 215 is driven back to the default initial location when media content is resumed. In one embodiment of the invention, the script command to restore the DataWindow frame 215 has a type of YAHOO! with a parameter of SETURL (default).

While there is no specific technical requirement on the data rates for the encoding of media content or advertisements, it is important that consistency be maintained in the encoding rates. The URL links to invoke media content should have a representation of the data rate of the stream passed as an argument in the URL. The argument values correspond to the typical values used to display those links, such as 56, 100, 300. It is important, but not imperative, that values passed in the URL links correspond to the values provisioned into the Ad Server so that the proper matching occurs.

Although the invention is described with reference to specific embodiments thereof, the embodiments are merely illustrative, and not limiting, of the invention, the scope of which is to be determined solely by the appended claims.

## Claims

1. A method for providing streaming multimedia advertisements comprising:
opening a browser window at a user computer:
building a frame set In said browser window, said frame set comprising a media player frame (205) for presenting streaming content with a media player (102) executing at said user computer and a data frame (215);
searching a constructed directory for files defining the parameters of said frame set;
requesting a playlist, said playlist identifying streaming advertisement and media content, wherein the request for said playlist comprises a URL having a position argument indicating a location within said media content at which an advertisement is to be played and an argument indicating that said playing of said advertisement is event-based;
receiving said playlist at said media player, wherein said playlist includes a script command event corresponding to a script command event encoded within said media content, said event encoded within said media content being encoded at said location indicated by said position argument;
connecting to at least one media server (150) to retrieve said streaming advertisement and media content identified in said playlist from said server; and
playing said streaming content in said media player frame (205), wherein playing said streaming content comprises: playing said media content; detecting said event encoded within said media content and, in response to detecting said event encoded within said media content, playing an advertisement in accordance with said corresponding event in said playlist; and resuming the playing of said media content when the playing of said advertisement is complete.

2. The method of claim 1, further comprising receiving HTML content for display in said data frame, said HTML content being related to the streaming content playing in said media player frame.

3. The method of claim 1, further comprising receiving HTML content that is coupled to said streaming content playing in said media player frame.

4. The method of claim 9, further comprising logging the play of any advertisement on a server.

5. The method of claim 2 or 3, further comprising:
receiving an embedded script command in the streaming media or advertisement content that references HTML content corresponding to said streaming content to be displayed in said data window;
upon receiving the embedded script command, retrieving the referenced HTML content; and
displaying the retrieved HTML content in the data frame concurrently with the streaming content playing in the media player frame.

6. The method of claim 5, further comprising:
where the streaming content includes an advertisement, logging the viewing of said advertisement using said script command.

7. The method of claim 1, wherein the frame set is built at said user computer using parameters stored in a directory.

8. A method executed by at least one server to provide streaming content, the method comprising:
searching a constructed directory for files defining parameters of a frame set, said frame set comprising a medina player frame (205) for presenting streaming content with a media player (102) at a user computer and a data frame (215);
providing said frame set to said user computer;
receiving a request for a playlist, wherein the request for said playlist comprises a URL having a position argument indicating a location within media content at which an advertisement is to be played and an argument indicating that said playing of said advertisement is event-based;
building a playlist using information included in the request, the playlist identifying streaming advertisement and media content, wherein the playlist includes a script command event corresponding to a script command event encoded within said media content, said event encoded within said media content being encoded at said location indicated by said position argument;
transmitting the playlist to said user computer for said user computer to play said streaming content in said media player frame, wherein transmitting said playlist to said user computer enables said user computer to play said streaming content by: playing said media content; detecting said event encoded within said media content and, in response to detecting said event encoded within said media content, playing an advertisement in accordance with said corresponding event in said playlist; and resuming the playing of said media content when the playing of said advertisement is complete; and
providing said streaming advertising and media content to said user computer.

9. The method of claim 8, comprising encoding said event within said media content at a location within said media content at which an advertisement is to be played.

10. The method of claim 8, wherein the information comprises identification of a location of information for configuring the frame set on said computer.

11. The method of claim 8, further comprising:
in response to a request from the user computer, streaming content to said user computer; and
delivering HTML content related to the streaming content to the user computer, wherein display of the HTML content is synchronized with playback of the streaming content at the user computer.

12. The method of claim 11, wherein streaming content to said user computer further comprises:
embedding a script command in the streaming content, wherein the script command references the HTML content.

13. The method of claim 8, further comprising logging a viewing of said streaming advertisement content.

## Patentansprüche

1. Verfahren zum Bereitstellen von Streaming-Multimedia-Werbungen, umfassend:
- Öffnen eines Browser-Fensters auf einem Nutzer-Computer,
- Aufbauen eines Framesets in dem Browser-Fenster, wobei das Frameset einen Media-Player-Frame (205) zum Darstellen von Streaming-Inhalt mit einem Media-Player (102), welcher auf dem Nutzer-Computer ausgeführt wird, und einen Daten-Frame (215) umfasst,
- Durchsuchen eines erstellten Verzeichnisses nach Dateien, die die Parameter des Framesets definieren,
- Anfordern einer Abspielliste, wobei die Abspielliste Streaming-Werbung und Medien-Inhalt identifiziert, wobei die Anforderung für die Abspielliste eine URL umfasst, welche ein Positionsargument, das eine Stelle innerhalb des Medien-Inhalts anzeigt, bei welcher eine Werbung abzuspielen ist, und ein Argument aufweist, das anzeigt, dass das Abspielen der Werbung ereignisbasiert ist,
- Empfangen der Abspielliste auf dem Media-Player, wobei die Abspielliste ein Skript-Befehl-Ereignis umfasst, weiches einem Skript-Befehl-Ereignis entspricht, das innerhalb des Medien-Inhalts kodiert ist, wobei das Ereignis, das innerhalb des Medien-Inhalts kodiert ist, an der Stelle kodiert ist, welche von dem Positionsargument angezeigt wird,
- sich Verbinden mit wenigstens einem Medien-Server (150), um die Streaming-Werbung und den Medien-Inhalt, welche in der Abspielliste identifiziert sind, von dem Server abzurufen, und
- Abspielen des Streaming-Inhalts in dem Media-Player-Frame (205), wobei das Abspielen des Streaming-Inhalts umfasst:
- Abspielen des Medien-Inhalts,
- Detektieren des Ereignisses, das innerhalb des Medien-Inhalts kodiert ist, und in Reaktion auf das Detektieren des Ereignisses, das innerhalb des Medien-Inhalts kodiert ist, Abspielen einer Werbung gemäß dem entsprechenden Ereignis in der Abspielliste, und
- Fortsetzen des Abspielens des Medien-Inhalts, wenn das Abspielen der Werbung vollendet ist.

2. Verfahren nach Anspruch 1, ferner umfassend Empfangen von HTML-Inhalt zum Anzeigen in dem Daten-Frame, wobei der HTML-Inhalt im Bezug zu dem Streaming-Inhalt steht, welcher in dem Media-Player-Frame spielt

3. Verfahren nach Anspruch 1, ferner umfassend Empfangen von HTML-Inhalt, welcher mit dem Streaming-Inhalt gekoppelt ist, der in dem Media-Player-Frame spielt.

4. Verfahren nach Anspruch 1, ferner umfassend Aufzeichnen des Abspielens von jeder Werbung auf einem Server.

5. Verfahren nach Anspruch 2 oder 3, ferner umfassend:
- Empfangen eines eingebetteten Skript-Befehls in dem Streaming-Medium oder Werbungsinhalt, welcher auf HTML-Inhalt referenziert, der dem Streaming-Inhalt entspricht, der in dem Daten-Fenster anzuzeigen ist,
- auf das Empfangen des eingebetteten Skript-Befehls hin, Abrufen des referenzierten HTML-Inhalts und
- Anzeigen des abgerufenen HTML-Inhalts in dem Daten-Frame, zeitgleich mit Streaming-Inhalt, der in dem Media-Player-Frame spielt.

6. Verfahren nach Anspruch 5, ferner umfassend:
- wo der Streaming-Inhalt eine Werbung umfasst, Aufzeichnen des Sehens der Werbung unter Verwendung des Skript-Befehls.

7. Verfahren nach Anspruch 1, wobei das Frameset auf dem Nutzer-Computer aufgebaut wird, unter Verwendung von in einem Verzeichnis gespeicherten Parametern.

8. Verfahren, welches auf wenigstens einem Server ausgeführt wird, um Streaming-Inhalt bereitzustellen, wobei das Verfahren umfasst:
- Durchsuchen eines erstellten Verzeichnisses nach Dateien, die Parameter eines Framesets definieren, wobei das Frameset einen Media-Player-Frame (205) zum Darstellen von Streaming-Inhalt mit einem Media-Player (102) auf einem Nutzer-Computer und einen Daten-Frame (215) umfasst,
- Liefern des Framesets an den Nutzer-Computer,
- Empfangen einer Anforderung für eine Abspielliste, wobei die Anforderung für die Abspielliste eine URL umfasst, welche ein Positionsargument, das eine Stelle innerhalb des Medien-Inhalts anzeigt, bei welcher eine Werbung abzuspielen ist, und ein Argument aufweist, das anzeigt, dass das Abspielen der Werbung ereignisbasiert ist,
- Aufbauen einer Abspielliste unter Verwendung von Informationen, die in der Anforderung enthalten sind, wobei die Abspielliste Streaming-Werbung und Medien-Inhalt identifiziert, wobei die Abspielliste ein Skript-Befehl-Ereignis umfasst, welches einem Skript-Befehl-Ereignis entspricht, das innerhalb des Medien-Inhalts kodiert ist, wobei das Ereignis, das innerhalb des Medien-Inhalts kodiert ist, an der Stelle kodiert ist, welche von dem Positionsargument angezeigt wird,
- Übermitteln der Abspielliste an den Nutzer-Computer für den Nutzer-Computer zum Abspielen des Streaming-Inhalts in dem Media-Player-Frame, wobei das Übermitteln der Abspielliste an den Nutzer-Computer es dem Nutzer-Computer ermöglicht, den Streaming-Inhalt abzuspielen, durch:
- Abspielen des Medien-Inhalts,
- Detektieren des Ereignisses, das innerhalb des Medien-Inhalts kodiert ist, und in Reaktion auf das Detektieren des Ereignisses, das innerhalb des Medien-Inhalts kodiert ist, Abspielen einer Werbung gemäß dem entsprechenden Ereignis in der Abspielliste, und
- Fortsetzen des Abspielens des Medien-Inhalts, wenn das Abspielen der Werbung vollendet ist, und
- Liefern der Streaming-Werbung und des Medien-Inhalts an den Nutzer-Computer.

9. Verfahren nach Anspruch 8, umfassend Kodieren des Ereignisses innerhalb des Medien-Inhalts an einer Stelle innerhalb des Medien-Inhalts, an welcher eine Werbung abzuspielen ist.

10. Verfahren nach Anspruch 8, wobei die Informationen eine Identifikation einer Stelle von Informationen zum Konfigurieren des Framesets auf dem Computer umfassen.

11. Verfahren nach Anspruch 8, ferner umfassend:
- in Reaktion auf eine Anforderung von dem Nutzer-Computer, Streamen von Inhalt zu dem Nutzer-Computer, und
- Liefern von HTML-Inhalt, der in Beziehung zu dem Streaming-Inhalt steht, an den Nutzer-Computer, wobei eine Anzeige des HTML-Inhalts mit einer Wiedergabe des Streaming-Inhalts auf dem Nutzer-Computer synchronisiert wird.

12. Verfahren nach Anspruch 11, wobei das Streamen von Inhalt zu dem Nutzer-Computer ferner umfasst:
- Einbetten eines Skript-Befehls in den Streaming-Inhalt, wobei der Skript-Befehlt den HTML-Inhalt referenziert.

13. Verfahren nach Anspruch 8, ferner umfassend Aufzeichnen eines Ansehens des Streaming-Werbungs-Inhalts.

## Revendications

1. Procédé destiné à fournir des publicités multimédia en continu comprenant le fait :
d'ouvrir une fenêtre d'un navigateur sur un ordinateur d'un utilisateur ;
de construire un ensemble de cadres dans ladite fenêtre du navigateur, ledit ensemble de cadres comprenant un cadre de lecteur multimédia (205) pour présenter un contenu en continu avec un lecteur multimédia (102) s'exécutant au niveau dudit ordinateur de l'utilisateur et un cadre de données (215) ;
de rechercher dans un répertoire construit des fichiers définissant les paramètres dudit ensemble de cadres ;
de demander une liste d'écoute, ladite liste d'écoute identifiant un contenu publicitaire et multimédia en continu, où la demande pour ladite liste d'écoute comprend une adresse URL ayant un argument de position indiquant un emplacement dans ledit contenu multimédia auquel une publicité doit être lue et un argument indiquant que ladite lecture de ladite publicité dépend d'un événement ;
de recevoir ladite liste d'écoute au niveau dudit lecteur multimédia, dans lequel ladite liste d'écoute comporte un événement de commande de script correspondant à un événement de commande de script codé dans ledit contenu multimédia, ledit événement codé dans ledit contenu multimédia étant codé audit emplacement indiqué par ledit argument de position ;
de se connecter à au moins un serveur multimédia (150) pour récupérer ladite publicité en continu et ledit contenu multimédia identifié dans ladite liste d'écoute à partir dudit serveur ; et
de lire ledit contenu en continu dans ledit cadre de lecteur multimédia (205), où le fait de lire ledit contenu en continu comprend le fait : de lire ledit contenu multimédia ; de détecter ledit événement codé dans ledit contenu multimédia et, en réponse à la détection dudit événement codé dans ledit contenu multimédia, de lire une publicité conformément audit événement correspondant dans ladite liste d'écoute ; et de reprendre la lecture dudit contenu multimédia lorsque la lecture de ladite publicité est achevée.

2. Procédé de la revendication 1, comprenant en outre le fait de recevoir un contenu HTML pour l'afficher dans ledit cadre de données, ledit contenu HTML étant lié au contenu en continu en cours de lecture dans ledit cadre de lecteur multimédia.

3. Procédé de la revendication 1, comprenant en outre le fait de recevoir un contenu HTML qui est couplé audit contenu en continu en cours de lecture dans ledit cadre de lecteur multimédia.

4. Procédé de la revendication 1, comprenant en outre le fait de journaliser la lecture de toute publicité sur un serveur.

5. Procédé de la revendication 2 ou 3, comprenant en outre le fait :
de recevoir une commande de script incorporée dans le contenu publicitaire ou multimédia en continu qui référence un contenu HTML correspondant audit contenu en continu devant être affiché dans ladite fenêtre de données ;
sur réception de la commande de script incorporée, de récupérer le contenu HTML référencé ; et
d'afficher le contenu HTML récupéré dans le cadre de données en même temps que le contenu en continu en cours de lecture dans le cadre de lecteur multimédia.

6. Procédé de la revendication 5, comprenant en outre :
lorsque le contenu en continu comporte une publicité, le fait de journaliser la visualisation de ladite publicité en utilisant ladite commande de script.

7. Procédé de la revendication 1, dans lequel l'ensemble de cadres est construit sur ledit ordinateur d'un utilisateur en utilisant des paramètres stockés dans un répertoire.

8. Procédé exécuté par au moins un serveur pour fournir un contenu en continu, le procédé comprenant le fait :
de rechercher dans un répertoire construit des fichiers définissant des paramètres d'un ensemble de cadres, ledit ensemble de cadres comprenant un cadre de lecteur multimédia (205) pour présenter un contenu en continu avec un lecteur multimédia (102) sur un ordinateur d'un utilisateur et un cadre de données (215) ;
de fournir ledit ensemble de cadres audit ordinateur de l'utilisateur ;
de recevoir une demande pour une liste d'écoute, où la demande pour ladite liste d'écoute comprend une adresse URL ayant un argument de position indiquant un emplacement dans un contenu multimédia où une publicité doit être lue et un argument indiquant que ladite lecture de ladite publicité dépend d'un événement ;
de construire une liste d'écoute en utilisant des informations comprises dans la demande, la liste d'écoute identifiant un contenu publicitaire et multimédia en continu, où la liste d'écoute comporte un événement de commande de script correspondant à un événement de commande de script codé dans ledit contenu multimédia, ledit événement codé dans ledit contenu multimédia étant codé audit emplacement indiqué par ledit argument de position ;
de transmettre la liste d'écoute audit ordinateur de l'utilisateur pour que ledit ordinateur de l'utilisateur lise ledit contenu en continu dans ledit cadre de lecteur multimédia, où la transmission de ladite liste d'écoute audit ordinateur de l'utilisateur permet audit ordinateur de l'utilisateur de lire ledit contenu en continu : en lisant ledit contenu multimédia ; en détectant ledit événement codé dans ledit contenu multimédia et, en réponse à la détection dudit événement codé dans ledit contenu multimédia, de lire une publicité conformément audit événement correspondant dans ladite liste d'écoute ; et reprendre la lecture dudit contenu multimédia lorsque la lecture de ladite publicité s'achève ; et
de fournir ledit contenu publicitaire et multimédia en continu audit ordinateur de l'utilisateur.

9. Procédé de la revendication 8, comprenant le fait de coder ledit événement dans ledit contenu multimédia à un emplacement dans ledit contenu multimédia auquel une publicité doit être lue.

10. Procédé de la revendication 8, dans lequel les informations comprennent l'identification d'un emplacement d'informations pour configurer l'ensemble de cadres sur ledit ordinateur.

11. Procédé de la revendication 8, comprenant en outre :
en réponse à une demande provenant de l'ordinateur de l'utilisateur, le fait de transmettre en continu un contenu audit ordinateur de l'utilisateur ; et
de délivrer un contenu HTML lié au contenu en continu à l'ordinateur de l'utilisateur, dans lequel le fait d'afficher le contenu HTML est synchronisé avec la lecture du contenu en continu sur l'ordinateur de l'utilisateur.

12. Procédé de la revendication 11, dans lequel le fait de transmettre en continu un contenu audit ordinateur de l'utilisateur comprend en outre le fait :
d'intégrer une commande de script dans le contenu en continu, où la commande de script référence le contenu HTML.

13. Procédé de la revendication 8, comprenant en outre le fait de journaliser une visualisation dudit contenu publicitaire en continu.
